# EUROPEAN PATENT APPLICATION

(11) **EP 2 214 158 A2**
(43) Date of publication of application: **04.08.2010**
(21) Application number: 10152048.4
(22) Date of filing: 29.01.2010
(51) Int. Cl.: G09G 5/14, G06F 3/14

(54) **Control system and method for displaying multi-windows for multiple computers or video devices**

(30) Priority: 03.02.2009 US 149624 P
(71) Applicant: Silicon Video Sytems, Inc., Chupei City, Hsinchu County 30200 (TW)
(72) Inventor: Gong, Morris, Chupei City Hsinchu County 30200 (TW); Lin, Chou-Cheng, Chupei City Hsinchu County 30200 (TW); CHen, Wen-Jong, Chupei City Hsinchu County 30200 (TW)
(74) Representative: Mittler, Enrico

(57) **Abstract**

A control system and a method for display a plurality of video signals, the control system comprises at least one computer, at least one video device, at least one video command center (VCC) module, at least one mouse keyboard controller (MKC), a mouse, a keyboard, and at least one display device, The at least one video command center module simultaneously and separately multi-displays a plurality of input sources on at least two windows of the at least one display device, and the video command center module controlling one of the at least two windows that is selected in accordance with the mouse signal and the keyboard signal transmitted by the at least one mouse keyboard controller.

## Description

### BACKGROUND OF THE INVENTION

### (1) FIELD OF THE INVENTION

The present invention generally relates to the a control system and a method for display a plurality of video signals, and more particularly to a control system and a method for displaying multi-images from at least one computer and at least one video device to be viewed on one display device simultaneously, and if necessary, selectively controlled and operated by the user in accordance with a mouse signal and a keyboard signal.

### (2) DESCRIPTION OF PRIOR ART

In some environments, use of laptops and desktop computers in a confined area need to be monitored by another person, for example: teachers in charge of students in a classroom who are required to prepare a document in the classroom may find it desirable to monitor the student's progress in the document and, when necessary offer suggestions to the student. In order to read the monitor or read the document, the teacher has to interrupt the student and ask for a printed copy of the document or stand over the student and read the document on the student's computer. While reviewing a student's writings in this manner may be acceptable in classes with a few students, in classes with larger number of students, such reviewing methods are not practical.

What is needed is a system that allows the output of two or more remote computers or video devices to be monitored on a main monitor and when necessary, enables the user to take selective control of the mouse and keyboard operations of the remote computers or video devices.

### SUMMARY OF THE INVENTION

The present application is directed to a control system and a method for displaying multi-windows for multiple computers or video devices.

The control system provides at least one computer, at least one video device, a mouse, a keyboard, at least one video command center module, at least one mouse keyboard controller, and at least one display device. The at least one computer provides a first video signal. The at least one video device provides a second video signal. The mouse provides a mouse signal. The keyboard provides a keyboard signal. The at least one video command center (VCC) module connects with the at least one computer and the at least one video device. The at least one mouse keyboard controller (MKC) connects with the video command center module, the computer, the video device, the mouse and the keyboard. The at least one mouse keyboard controller receives and transmits the mouse signal and the keyboard signal to the video command center module. The at least one display device having at least two windows connect with the video command center module. The first video signal and the second video signal are simultaneously multi-displayed on the at least one display device and are separately displayed on the at least two windows by the video command center module, the video command center module controlling one of the at least two windows in accordance with the mouse signal and the keyboard signal transmitted by the at least one mouse keyboard controller.

The present invention further provides a method for displaying multi-windows for multiple computers. The method comprises connecting at least one mouse keyboard controller (MKC) to at least one computer, at least one video device, a mouse, a keyboard, and at least one video command center module, wherein the computer, the video device, the mouse, and the keyboard separately provide a first video signal, a second video signal, a mouse signal, and a keyboard signal. The method comprises connecting at least one display device to the video command center module. The method comprises providing at least two windows in the at least one display device with the video command center module. The method comprises simultaneously multi-displaying the first video signal and the second video signal on the two windows of the at least one display device with the video command center module. The method comprises controlling one of the at least two windows in accordance with the mouse signal and the keyboard signal.

In order to make the aforementioned of the invention more comprehensible, embodiments accompanying figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1A is a block diagram of a control system according to an embodiment of the present invention.
FIG. 1B is a block diagram of a control system with cascading two VCC module and cascading two MKCs according to another embodiment of the present invention.
FIG. 1C is a block diagram of a control system with cascading two display device, cascading two VCC module, and cascading two MKCs according to another embodiment of the present invention.
FIG. 2 is a flow chart of a method for displaying multi-windows for multiple computers of video device according to another embodiment of the present invention.

### DETAILED DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

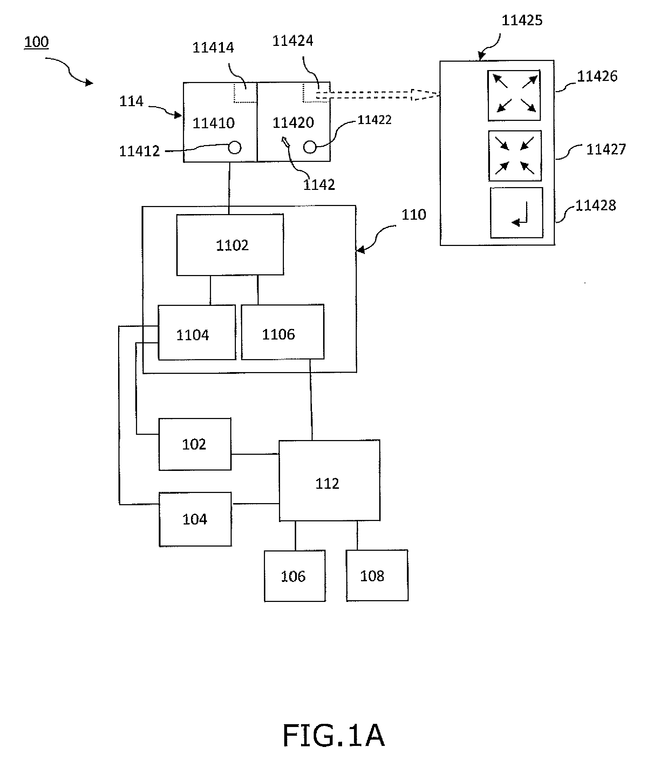

FIG. 1A is a block diagram of a control system according to an embodiment of the present invention. Referring to FIG. 1A, the control system 100 in the present embodiment includes a computer 102, a video device 104, a mouse 106, a keyboard 108, a video command center (VCC) module 110, a mouse keyboard controller (MKC) 112, and a display device 114. In an exemplary embodiment, the input sources of the control system 100 are the computer 102 and the video device 104. Additionally, the input source includes at least one computer, at least one video device, a plurality of computers, a plurality of video devices, or video capture devices. However, the input source in the present invention is not limited to the combination of the computer 102 and the video device 104, and other combination of the above-mentioned input sources.

The computer 102 and the video device 104 separately provide a first video signal and a second video signal. The mouse 106 and the keyboard 108 provide a mouse signal and a keyboard signal individually. The video command center (VCC) module 110 connects with the computer 102 and the video device 104. The mouse keyboard controller (MKC) 112 connects with the video command center module 110, the computer 102, the video device 104, the mouse 106 and the keyboard 108, wherein the mouse keyboard controller 112 receives and transmits the mouse signal and the keyboard signal to the video command center module 110. The display device 114 having two windows connects with the video command center module 110.

In the present embodiment, the display device 114 is a liquid crystal display (LCD). Generally speaking, the display device includes Electroluminescent display (ELD), Cathode ray tube (CRT) display device, Liquid crystal display (LCD) display device with LED backlight, Plasma display panel (PDP) display device, Digital Light Processing (DLP) display device, Liquid crystal on silicon (LCOS) display device, Organic light-emitting diode (OLED) display device, and stereoscopic display device. However, the display device is not limited to the above-described display device. Alternatively, any kinds of display devices may be used in the present invention.

As described above, the video command center module 110 has a multiplexer 1102, a video controller 1104, and a microprocessor 1106. The video controller 1104, connected with the computer 102 and the video device 104, are configured to receive the first video signal and the second video signal. Additionally, the video controller 1104 displays a mouse cursor 1142 on the first window 11410 or the second window 11420 of the display device 114 through the multiplexer 1102 according to the mouse signal and the keyboard signal. The microprocessor 1106 connected with the mouse keyboard controller (MKC) 112, for receiving the mouse signal and the keyboard signal transmitted from the mouse keyboard controller (MKC) 112, wherein the microprocessor 1106 detects which one of the window overlapped the mouse cursor 1142. The multiplexer 1102 connects with the microprocessor 1106 and the video controller 1106 and the display device 114, for receiving the first video signal and the second video signal transmitted from the video controller 1104, and the mouse signal and the keyboard signal transmitted from the microprocessor 1106.

The first video signal and the second video signal separately provided by the computer 102 and the video device 103 are individually transmitted to multiplexer through the video controller 1104. The multiplexer 1102 simultaneously multi-displays the first video signal and the second video signal on the display device 114. The first video signal and the second video signal are separately displayed on the first window 11410 and the second window 11420 by multiplexer 1102 of the video command center module 110.

One of the two windows overlapped the mouse cursor is selected and the selected window is controlled corresponding to the mouse signal and the keyboard signal. The multiplexer 1102 simultaneously and separately multi-displays the first video signal and the second video signal on the first window 11410 and second window 11420 of the display device 114, and the controlling one of the at least two windows in accordance with the mouse signal and the keyboard signal.

In the present embodiment, the mouse cursor 1142 locates on the second window 11420 in accordance with the controlling of the mouse signal. The microprocessor 1106 detects the mouse cursor 1142 overlapped the second window 11420 corresponded to the second window 11420. The microprocessor 1106 transmits the control signal that the second window 11420 is selected by the mouse 106 to the mouse keyboard controller (MKC) 112, and the mouse keyboard controller (MKC) 112 transmitting the mouse signal and the keyboard signal to the video device 104. However, the way of window selection in the present invention is not limited to the overlap between the second window 11420 and mouse cursor 1142, and other way of window selection may also be applied to the control system by the present invention.

In another embodiment, the display device 114 further comprises two active symbols, the first active symbol 11412 and the second active symbol 11422. The first active symbol 11412 and the second active symbol 11422 are separately displayed on the first window 11410 and the second window 11420 by the video controller 1104. One of the first window 11410 and the second window 11420 are selected by double clicking the mouse cursor 1142 or overlapping the mouse cursor 1142 with the active symbol (the first active symbol 11412 or the second active symbol 11422). The selected window is controlled according to the mouse signal and the keyboard signal.

In the embodiment, the first video signal and the second video signal are displayed on the first window 11410 and the second window 11420 of the display device 114 by the video controller 1104 through the multiplexer 1102 in 1600x1200, 1900x1080 or 1900x1200 display resolution according to input source, the computer 102 and the video device 104. In the present invention, the above-mentioned display resolution outputted by the video controller 1104 is not limited to 1600x1200, 1900x1080 or 1900x1200. It is noted, however, that the first video signal and the second video signal can be display by the video controller 1104 through the multiplexer 11420 in any kind of display resolution in accordance with the display resolution of the display device 114.

In another embodiment, the first window 11410 and the second window 11420 may be resized, positioned and labeled by the video controller 1104 in accordance with the mouse signal and the keyboard signal.

In another embodiment, the video controller 1104 further comprises an on screen display (OSD) interface to provide an alarm reporting, a label, and a border of the first window 11410 and the second window 11420. There is a first OSD area 11414 on the first window 11410, and a second OSD area 11424 on the second window 11420. A menu may pop up, when the mouse cursor 1142 moves to the first OSD area 11414 or the second OSD area 11424. The menu includes a plurality of options such as full screen, minimizing the window, and enters function. In the embodiment, as shown in the FIG. 1A, the second menu 11425 is popped up, when the mouse cursor 1142 moves to the second OSD area 11424. The second menu 11425 includes the options, full screen 11426, minimizing the second window 11427, and enters function 11428. In the present embodiment, the first OSD area 11414 and the second OSD area 11424 is invisible area. It is noted, however, that the first OSD area 11414 and the second OSD area 11424 is not only limited to the type of invisible area but also the type of visible area. In the present embodiment, the first OSD area 11414 and the second OSD area 11424 are separately located on the upper right corner of the first window 11410 and the second window 11420. However, the location of the OSD area is not limited to the upper right corner of window. Alternatively, any location of the window may be applied in the present.

In the other embodiment of the present invention, the format of the first video signal and the second signal may be VGA, DVI, HDMI, YPbPr, 480p 60Hz, 720p 50/60Hz, 1080i 50/60Hz or 576p 50Hz. The format of the first video signal and the second video signal can be auto detected by the video controller 1104. It is noted that the format of the video signal is not limited to the above-mentioned format. Alternatively, any types of formats may be used in the present.

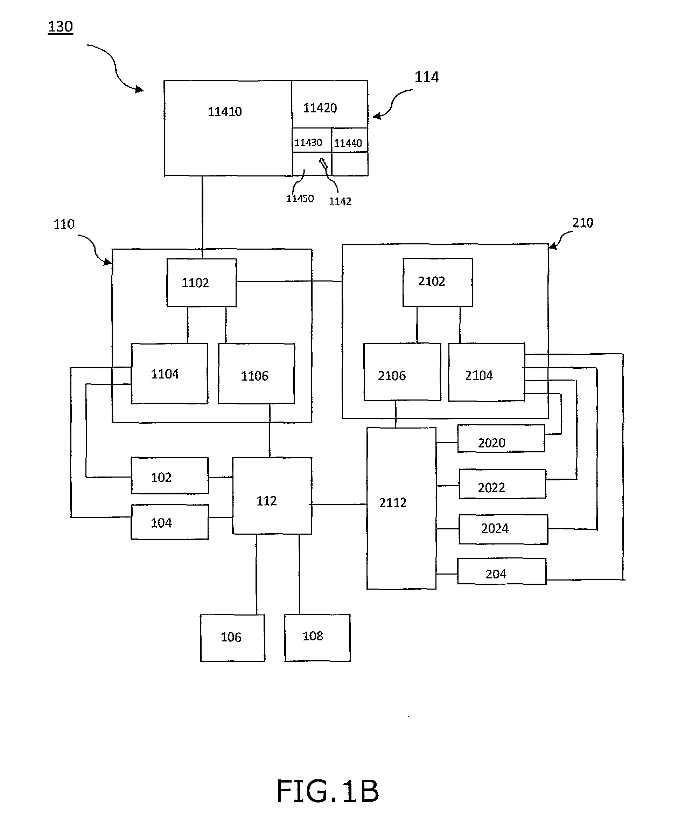

FIG 1B is a block diagram of a control system with cascading two VCC module and cascading two MKCs according to another embodiment of the present invention. Referring to FIG 1B, the control system 110 cascades the first video command center (VCC) module 210, and the mouse keyboard controller 112 cascades the first mouse keyboard controller (MKC) 2112. The first video command center (VCC) module 210 includes a first multiplexer 2102, a first microprocessor 2106, and a video controller 2104. The first mouse keyboard controller (MKC) 2112 is connected to four input sources, the first computer 2020, the second computer 2022, the third computer, and the first video device 204.

The mouse keyboard controller (MKC) 112 cascades the first mouse keyboard controller (MKC) 2112. The first video controller 2104, connected with the input sources, the first computer 2020, the second computer 2022, the third computer 2024, and the first video device 104. The first video controller 2104 is configured to receive the video signals from the input sources.

The multiplexer 1102 cascades the first multiplexer 2102, and separately receives the video signals from the input sources, the first computer 2020, the second computer 2022, the third computer, and the first video device 204, transmitted from the first video controller 2104 through the first multiplexer 2102. The multiplexer 1102 simultaneously and separately multi-displays the video signals received from the video controller 1104 and the first multiplexer 2102 on six windows of the display device 114, as shown in FIG 1B, wherein the computer 102, the video device 104, the first computer 2020, the second computer 2022, the third computer 2024, and he first video device 204 are separately corresponding to the first window 11410, the second window 11420, the third window 11430, the fourth window 11440, the fifth window 11450, and the sixth window 11460. One of the six windows overlapped the mouse cursor 1142 is selected and the selected window is controlled corresponding to the mouse signal and the keyboard signal.

In the present embodiment, the microprocessor 1106 detects the mouse cursor 1142 overlapping the fifth window 11450, the microprocessor 1106 transmits the control signal that the fifth window 11450 is selected by the mouse 106 to the to the first mouse keyboard controller (MKC) 2112 through the mouse keyboard controller (MKC) 112. The mouse keyboard controller (MKC) 112 transmitting the mouse signal and the keyboard signal to the third computer 2024 through the mouse keyboard controller (MKC) 112 and the first mouse keyboard controller (MKC) 2112. However, the number of cascading the mouse keyboard controller (MKC)/video command center (VCC) modules in the present invention is not limit to two, and a plurality of mouse keyboard controllers (MKC)/video command centers (VCC) may also be applied to the control system.

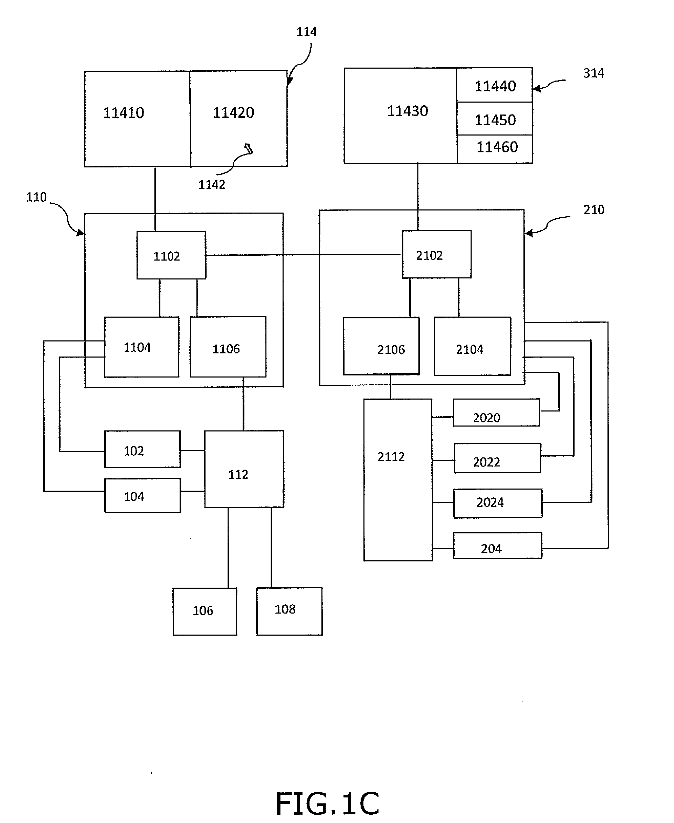

As shown in FIG. 1C, FIG 1C is a block diagram of a control system with cascading two display devices (114, 314), cascading two VCC modules (110, 210), and cascading two MKCs (112, 2112) according to another embodiment of the present invention. The difference between the FIG. 1C and FIG. 1B is the FIG. 1C further comprises a first display device 314. The display device 114 can connect with the first display device 314 through the multiplexer 1102 and the first multiplexer 2102, so as to be a cascading display device, wherein the first display device 314 displays the input sources, the first computer 2020, the second computer 2022, the third computer 2024, and the first video device 204, and the display device 114 display the input sources, the computer 102, and the video device 104. The mouse cursor 1142 can continuously move from the display device 114 and the first display device 314, when the display device 114 in series connect with the first display device 314.

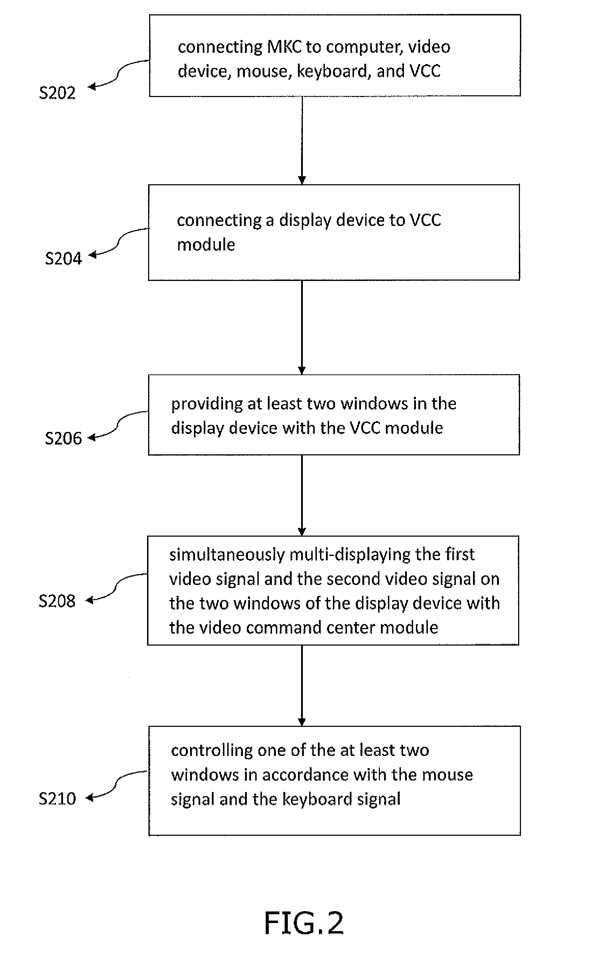

FIG. 2 is a flow chart of a method for displaying multi-windows for multiple computers of video device according to another embodiment of the present invention. As indicated in step S202, the method includes connecting a mouse keyboard controller (MKC) 112 to a computer 102, a video device 104, a mouse 106, a keyboard 108, and a video command center module 110, referring to FIG. 1A, wherein the computer 102, the video device 104, the mouse 106, and the keyboard 108 separately provide a first video signal, a second video signal, a mouse signal, and a keyboard signal.

As indicated in step S204, the method includes connecting a display device 114 to the video command center module 10. In the present embodiment, the display device 114 is a liquid crystal display (LCD). Generally speaking, the display device 114 includes Electroluminescent display (ELD), Cathode ray tube (CRT) display device, Liquid crystal display (LCD) display device with LED backlight, Plasma display panel (PDP) display device, Digital Light Processing (DLP) display device, Liquid crystal on silicon (LCOS) display device. Organic light-emitting diode (OLED) display device, and stereoscopic display device. However, the display device is not limited to the above-described display device. Alternatively, any kinds of display devices may be used in the present invention.

As indicated in step S206, the video command center (VCC) module 110 provides the first window 11410 and the second window 11420 in the display device 114 in accordance with the first video signal and the second video signal. The step further comprises providing a video controller 1104, a microprocessor 1106, and a multiplexer 1102 in the video command center (VCC) module 110, wherein the multiplexer 1102 connects with the video controller 1104 and the microprocessor 1106, the video controller 1104 connecting with the computer 102 and the video device 104, the microprocessor 1106 connecting with the mouse keyboard controller (MKC) 112.

The video device 104 displays a mouse cursor 1142 on the two windows, the first window 11410 and the second window 11420 of the display device 114 in accordance with the mouse signal and the keyboard signal. The microprocessor 1106 receives the mouse signal and the keyboard signal transmitted from the mouse keyboard controller 112.

In another embodiment, the video controller 1104 further provides an on screen display (OSD) interface with the video controller on the display device so as to generate an alarm reporting, a label, and a border of the two windows. There is a first OSD area 11414 on the first window 11410, and a second OSD area 11424 on the second window 11420. A menu may pop up, when the mouse cursor 1142 moves to the first OSD area 11414 or the second OSD area 11424. The menu includes a plurality of options such as full screen, minimizing the window, and enters function. In the embodiment, as shown in the FIG. 1A, the second menu 11425 is popped up, when the mouse cursor 1142 moves to the second OSD area 11424. The second menu 11425 includes the options, full screen 11426, minimizing the second window 11427, and enters function 11428. In the present embodiment, the first OSD area 11414 and the second OSD area 11424 is invisible area. It is noted, however, that the first OSD area 11414 and the second OSD area 11424 is not only limited to the type of invisible area but also the type of visible area. In the present embodiment, the first OSD area 11414 and the second OSD area 11424 are separately located on the upper right corner of the first window 11410 and the second window 11420. However, the location of the OSD area is not limited to the upper right corner of window. Alternatively, any location of the window may be applied in the present.

In another embodiment, the first window 11410 and the second window 11420 may be resized, positioned and labeled by the video controller 1104 in accordance with the mouse signal and the keyboard signal.

In the other embodiment, the format of the first video signal and the second video signal are VGA, DVI, HDMI, YPbPr, 480p 60Hz, 720p 50/60Hz, 1080i 50/60Hz or 576p 50Hz. The format of the first video signal and the second video signal can be auto detected by the video controller 1104. It is noted that the format of the video signal is not limited to the above-mentioned format. Alternatively, any types of formats may be used in the present.

The step S208, the video command center module 110 simultaneously multi-displays the first video signal and the second video signal on the two windows of the display device 114. Each of the first window 11410 and the second window11420 is separately displayed the first active symbol 11412 and the second active symbol 11422 by the video controller 1104 in the first window 11410, and the second window 11420. One of the two windows is selected by double clicking the mouse cursor 1142 or overlapping the mouse cursor with the active symbol, the first active symbol 11412 or the second active symbol 11422. The video controller 1104 displays the first video signal and the second video signal in 1600x1200, 1900x1080 or 1900x1200 display resolution. In the present invention, the above-mentioned display resolution outputted by the video controller 1104 is not limited to 1600x1200, 1900x1080 or 1900x1200. It is noted, however, that the first video signal and the second video signal can be display by the video controller 1104 through the multiplexer 11420 in any kind of display resolution in accordance with the display resolution of the display device 114.

The step S210, one of the two windows, the first window 11410 and the second window 11420, is selected by overlapping the window with the mouse cursor 1142 and is controlled in accordance with the mouse signal and the keyboard signal.

In an exemplary embodiment, the input sources of the control system 100 are the computer 102 and the video device 104. Additionally, the input source includes at least one computer, at least one video device, a plurality of computers, a plurality of video devices, or video capture devices. However, the input source in the present invention is not limited to the combination of the computer 102 and the video device 104, and other combination of the above-mentioned input sources.

Although the invention has been described with reference to the above mentioned embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A control system for displaying multi-windows for multiple computers or video devices, comprising:
at least one computer for providing a first video signal;
at least one video device for providing a second video signal;
a mouse for providing a mouse signal;
a keyboard for providing a keyboard signal;
at least one video command center (VCC) module connected with the at least one computer and the at least one video device;
at least one mouse keyboard controller (MKC) connected with the video command center module, the computer, the video device, the mouse and the keyboard, wherein the at least one mouse keyboard controller receives and transmits the mouse signal and the keyboard signal to the video command center module;
at least one display device having at least two windows, connected with the video command center module; and
wherein the first video signal and the second video signal are simultaneously multi-displayed on the at least one display device and are separately displayed on the at least two windows by the video command center module, the video command center module controlling one of the at least two windows in accordance with the mouse signal and the keyboard signal transmitted by the at least one mouse keyboard controller.

2. The control system as claimed in claim 1, wherein the video command center module comprises:
a video controller, connected with the computer and the video device, for receiving the first video signal and the second video signal,
wherein the video controller displays a mouse cursor on the at least two windows of the at least one display device according to the mouse signal and the keyboard signal; and
a microprocessor, connected with the at least one mouse keyboard controller, for receiving the mouse signal and the keyboard signal transmitted from the at least one mouse keyboard controller (MKC),
wherein the microprocessor detects which one of the windows overlapped the mouse cursor;
a multiplexer, connected with the microprocessor and the video controller and the at least one display device, for receiving the first video signal and the second video signal transmitted from the video controller, and the mouse signal and the keyboard signal transmitted from the microprocessor;
wherein the multiplexer simultaneously multi-displays the first video signal and the second video signal on at least two windows of the at least one display device and the controlling one of the at least two windows in accordance with the mouse signal and the keyboard signal.

3. The control system as claimed in claim 2, wherein one of the at least two windows overlapped the mouse cursor is selected and controlled corresponding to the mouse signal and the keyboard signal.

4. The control system as claimed in claim 2, further comprising an active symbol separately displayed on the at least two window by the video controller, one of the at least two windows being selected by double clicking the mouse cursor or overlapping the mouse cursor with the active symbol and being controlled according to the mouse signal and the keyboard signal.

5. The control system as claimed in claim 2, wherein the at least two windows are resized, positioned and labeled by the video controller in accordance with the mouse signal and the keyboard signal.

6. The control system as claimed in claim 2, wherein the video controller further comprising an on screen display (OSD) interface to provide an alarm reporting, a label, and a border of the at least two windows.

7. A method for displaying multi-windows for multiple computers, comprising:
connecting at least one mouse keyboard controller (MKC) to at least one computer, at least one video device, a mouse, a keyboard, and at least one video command center module, wherein the computer, the video device, the mouse, and the keyboard separately provide a first video signal, a second video signal, a mouse signal, and a keyboard signal;
connecting at least one display device to the video command center module;
providing at least two windows in the at least one display device with the video command center module;
simultaneously multi-displaying the first video signal and the second video signal on the two windows of the at least one display device with the video command center module; and
controlling one of the at least two windows in accordance with the mouse signal and the keyboard signal.

8. The method as claimed in claim 7, further comprising:
providing a video controller, a microprocessor, and a multiplexer in the video command center (VCC) module, wherein the multiplexer connects with the video controller and the microprocessor, the video controller connecting with the computer and the video device, the microprocessor connecting with the mouse keyboard controller;
displaying a mouse cursor on the at least two windows of the at least one display device with the video device, in accordance with the mouse signal and the keyboard signal; and
receiving the mouse signal and the keyboard signal transmitted from the at least one mouse keyboard controller with the microprocessor.

9. The method as claimed in claim 8, wherein the controlling step comprises selecting and controlling one of the at least two windows corresponding to the mouse signal and the keyboard signal by overlapping the window with the mouse cursor.

10. The method as claimed in claim 8, wherein the simultaneously multi-displaying step comprises separately displaying an active symbol in the at least two window with the video controller, selecting one of the at least two windows by double clicking the mouse cursor or overlapping the mouse cursor with the active symbol, and controlling the window being selected according to the mouse signal and the keyboard signal.

11. The method as claimed in claim 8, further comprising resizing, positioning and labeling the at least two windows with the video controller in accordance with the mouse signal and the keyboard signal.

12. The method as claimed in claim 8, further comprising providing an on screen display (OSD) interface with the video controller on the display device so as to generate an alarm reporting, a label, and a border of the at least two windows.
